# EUROPEAN PATENT SPECIFICATION

(11) **EP 1 478 170 B1**
(45) Date of publication and mention of the grant of the patent: **05.04.2006**
(21) Application number: 03101343.6
(22) Date of filing: 14.05.2003
(51) Int. Cl.: H04N 1/60

(54) **System and method for calibrating a printing device having light and heavy inks**
Vorrichtung und Verfahren zur Kalibration einer Druckvorrichtung mit leichten und schweren Tinten
Système et procédé pour calibrer un dispositif d'impression ayant des encres légères et lourdes

(43) Date of publication of application: 17.11.2004
(73) Proprietor: AGFA-GEVAERT, 2640 Mortsel (BE)
(72) Inventor: Mahy, Marc, 2640, Mortsel (BE); Livens, Stefan, Septestraat 27, B-2460 Mortsel (BE)

(56) References cited:
- EP-A- 1 107 575
- US-B1- 6 331 042

## Description

### FIELD OF THE INVENTION

The present invention relates to the field of image rendering by means of printing devices, particularly multicolor output devices; the invention especially concerns calibration of these devices.

### BACKGROUND OF THE INVENTION AND DEFINITION OF TERMS

Today, more and more printing systems are developed for the reproduction of color images. Several printing technologies are used such as conventional photography, electrophotography, thermal transfer, dye sublimation and ink jet systems to name a few.

The independent values with which such a printing system can be addressed are called colorants or inks. For the purpose of generality, the values for these colorants can always be scaled to range from 0 to 100 %. A color reproduction device with n colorants is called a printer or an n-ink process.

With colorant space is meant an n-dimensional space with n the number of independent variables with which the printer can be addressed. In the case of an offset printing press, for example, the dimension of the space corresponds with the number of inks of the printing press.

With color space is meant a space that represents a number of quantities of an object that characterize its color. In most practical situations, colors will be represented in a 3-dimensional space such as the CIE XYZ space. However, also other characteristics can be used such as multi-spectral values based on filters that are not necessarily linearly related to the color matching functions to represent color. A typical example is an n-dimensional space of which the axes correspond to densities.

With colorant gamut or colorant domain is meant the delimited region in colorant space of colorant combinations that are physically realizable by a given printer, taking into account possible extra limitations on colorant combinations.

The colorant gamut of a CMYK offset printing press for example is often delimited by a linear condition that limits the sum of the four colorants (for example to 340%).

With color gamut is meant a delimited region in color space, containing colors that are physically realizable by a given printer, taking into account possible extra colorant limitations.

A printer model is a mathematical relation that expresses color values as a function of colorants for a given printer. The variables for the colorants are denoted as *c*₁, *c*₂,...,*c*_{*n*}, with n the dimension of the colorant space. An n-ink process is completely characterized by its colorant gamut with a number of colorant limitations and the printer model. Because of this close relationship between an n-ink process and the printer model, the operations typical for a printer model are also defined for the n-ink process.

The printer model is often based on a printer target. Such a target consists of a number of uniform color patches, defined in the colorant space of the printing device. The printer target is printed and measured, and based on the values of the patches in colorant space and the measured values, the printer model is made. A printer target is normally based on a number of sampling points along the different colorant axes. Based on the sampling points a regular grid can be constructed in colorant space of which a number of grid points are contained by the printer target. Hence a target can be said to be complete or incomplete (see **EP-A-1 146 726** for complete and incomplete printer targets).

Creating the printer model is also called characterizing the printer; this is an important step in the consistent reproduction of images. Before a printer is characterized, it is first calibrated, i.e. put in a standard state. When the printer model is created, it can be inverted in order to obtain a so-called characterization transformation (or inverse printer model). The characterization transformation transforms given colors from color space (typically CIELAB) to the colorant space of the printing device, whereas the printer model transforms given colorant values in the colorant space of the printer to color values in color space.

The calculation of the correct amounts of colorant for the rendering of color images on a printer is also called the color separation problem. Most of the color separation strategies known in the art comprise the following steps.

In a first step, the relation between the amounts of colorants and the resulting colors on a printer is characterized. This is done by first printing a set of colorant combinations that spans the dynamic range of the printer and measuring the resulting colors. An example of such a set is the ANSI IT8.7/3 reference target.

In a second step this relation is mathematically modeled, to obtain the printer model. The printer model usually consists of some form of an analytical expression that predicts color for a given combination of colorant amounts.

In a third step the printer model is inverted. This is necessary since the color separation problem is involved with finding a set of colorants that renders a given color and not vice versa.

Different types of printer models can be used, ranging from analytical models simulating the printing process, over polynomials approximating the global behavior of the printer, to localized approximations of the printer in the colorant domain.

An important advantage of localized models is that a simple mathematical expression is used to represent the printer behavior. For such an approach, in most cases the colorant cube is divided into cells that are all modeled separately. A disadvantage is that, at boundaries of neighboring cells, the model is not continuous for the first derivative and hence sometimes slope discontinuities in the modeling can be seen.

In characterizing printing devices, in most cases multidimensional Look Up Tables (LUT's) are used. A typical example of such a characterization system is represented by the ICC profile format (ICC stands for International Color Consortium). For printers, both the forward and the inverse relation is needed. The forward relation, embodied in the forward LUT, predicts the color values in function of given colorant values, i.e. it represents the printer model. The inverse relation, embodied in the inverse LUT, gives the colorant values required to obtain given color values, i.e. it represents the characterization transformation of the printer.

A LUT is often characterized by a number of sampling points (or sampling values) per axis. Based on these sampling points, usually a regular grid is constructed. However, it is also possible to construct LUT's with non-regular grids. Also in this case the LUT's can be characterized by sampling points per axis but not all combinations of the sampling points of the different axes result in grid points. We refer to patent application **EP-A-1 146 726** for more information on grids, printer models, complete and incomplete printer targets, and related terms, and to patent application **EP-A-1 083 739** for more information on calibration, characterization, and other relevant terms.

Several printers have, for one or more of the colorants, multi-density inks, i.e. two or more inks that have a different density and a similar hue, e.g. light cyan and heavy (i.e. dark) cyan. By means of multi-density inks, the apparent visual resolution of the printed images can be increased.

Patent **US-A-4 672 432** discloses a CMYK printing device (CMYK stands for the colorants cyan, magenta, yellow and black) with multi-density inks for cyan and for magenta. If, as is the case in that printing device, multi-density inks are used for several colorants, the printed image does not always look pleasing. E.g. undesired artifacts, such as a rainbow effect, may be seen when printing color vignettes, especially neutral vignettes. Color vignettes, also called color gradations, are objects wherein color smoothly changes from one color to another one. In a neutral vignette, color smoothly changes from white over light gray and dark gray to black. In CIELAB space, colors for which a* and b* are zero are considered to be neutral. For neutral colors, the lightness component L* varies from 0 to 100, wherein 0 corresponds to black and 100 to pure white.

There is thus still a need for an improved method for calibrating a printing device.

### SUMMARY OF THE INVENTION

The present invention is a method for calibrating a printing device as claimed in independent claim 5, and an apparatus as claimed in independent claim 1. Preferred embodiments of the invention are set out in the dependent claims. Preferably, a method in accordance with the invention is implemented by a computer program as claimed in claim 8.

The present invention concerns calibration of a printing device having multi-density inks for at least two colorants. Multi-density inks of a particular colorant include a heavy ink and a light ink of that colorant, the heavy ink having the higher density and the light ink the lower density. A multi-density CMYK printer typically has a heavy cyan and a light cyan ink and a heavy magenta and a light magenta ink. When printing images by means of multi-density inks, for low image densities only the light inks are used. When image density increases, the heavy inks start being used. In one embodiment of the present invention, the printing device starts applying a first heavy ink of a first colorant, e.g. heavy cyan, and a second heavy ink of a second colorant, e.g. heavy magenta, at the same starting point on a path in color space. This means that, if a color vignette is printed that corresponds to this path, the first heavy ink and the second heavy ink start being applied at the same point in the vignette.

In a preferred embodiment of the invention, the path corresponds to a set of neutral colors in color space. If the color space is CIELAB, the path is thus the L* axis, or a portion thereof.

An advantage of the invention is that undesired rainbow effects in color vignettes, especially neutral vignettes, are suppressed. Such rainbow effects may also occur in the reproduction of other images than vignettes, especially in image areas where color changes slowly and where small amounts of heavy ink are used; applying the invention also suppresses rainbow effects in such image areas.

In order to obtain this advantage, the starting point of the first heavy ink and the starting point of the second heavy ink need not be exactly equal; it suffices that they are substantially equal, as is discussed further below.

The invention is especially advantageous for printing combinations of color images and black-and-white images. A preferred application area of the invention is high quality ink jet proofing.

Further advantages and embodiments of the present invention will become apparent from the following description and drawings.

### BRIEF DESCRIPTION OF THE DRAWINGS

The invention is described with reference to the following drawings without the intention to limit the invention thereto, and in which:
Fig. 1 illustrates an embodiment of the invention;
Fig. 2 shows a color vignette printed in accordance with the invention;
Fig. 3 illustrates calibration of a printing device;
Fig. 4 shows a set of ink mixing tables in accordance with the invention;
Fig. 5 shows another set of ink mixing tables in accordance with the invention.

### DETAILED DESCRIPTION OF THE INVENTION

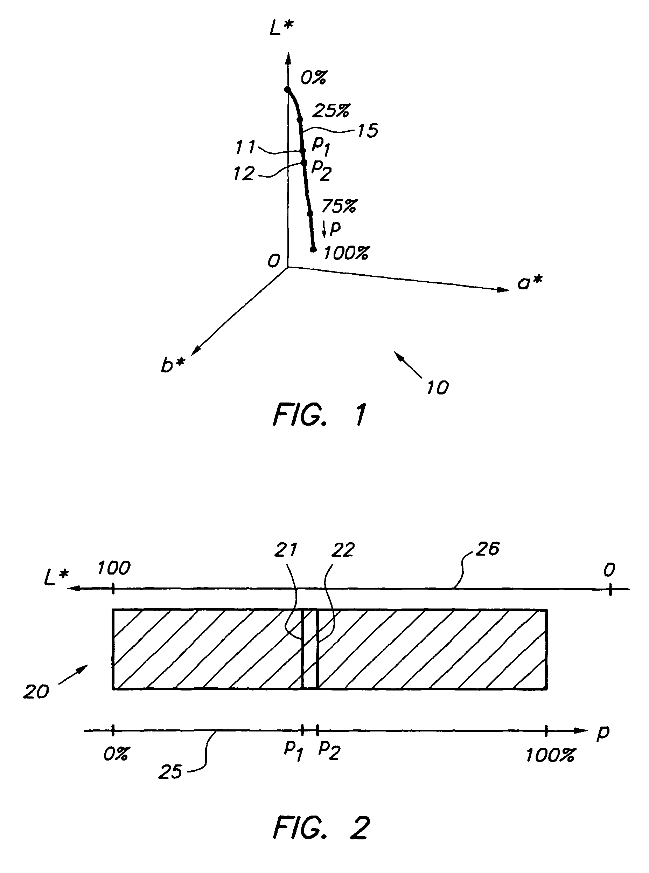

Fig. 1 shows a path 15 in a color space 10. In the embodiment of Fig. 1, the color space is CIELAB. A coordinate p varies along path 15, from p = 0% in the starting point of the path, over p = 25%, p = 75%, etc. to p = 100% in the end point of the path. Path 15 in color space 10 is a mathematical curve in a space; coordinate p is defined as a coordinate along that curve, as known from mathematical curve theory.

Path 15 may represent a set of sepia colors, so that each point along the path represents a shade of sepia, ranging from white, over light sepia, to very dark sepia. In another embodiment, path 15 represents a specific Pantone™ color; in that case, the point at e.g. coordinate p = 25% is the location in color space of the point that corresponds to 25% of that specific Pantone™ color. Another example is related to the use of absolute and relative colorimetric values. Suppose that the color space is CIELAB and that the receiving substrate, on which the ink is applied, is not white but yellow paper, with L* = 90, a* = 0 and b* = 5. If the neutral colors are now determined relatively to this yellow paper, their absolute colorimetic values do not coincide with the L* axis but are located on a curve in CIELAB space. In a preferred embodiment of the invention, path 15 corresponds to the absolute neutral colors, or, which is equivalent, to the neutral colors determined with respect to a white receiving substrate; if the color space 10 is CIELAB, the path 15 is then the L* axis, or a portion thereof.

Fig. 2 shows a color vignette 20 that corresponds to path 15 shown in Fig. 1, i.e. the colors that are obtained by varying coordinate p along path 15 in color space 10 are reproduced by the printing device, thus constituting color vignette 20. Axis 25 in Fig. 2 indicates coordinate p. Point 11 in Fig. 1 has coordinate p = p₁ along path 15 and point 12 has coordinate p₂. The color that corresponds in color space 10 to point 11 is reproduced by the printing device, which results (see Fig. 2) in printed line 21 in color vignette 20, at coordinate p₁ along axis 25. Analogously, the color values of point 12 in color space 10 (e.g. (L*₂, a*₂, b*₂) if the color space is CIELAB) are reproduced as printed line 22 in color vignette 20.

In case path 15 represents the neutral colors in CIELAB space, path 15 coincides with the L* axis; color vignette 20 is then a neutral vignette, wherein color smoothly changes from white (at L* = 100, see axis 26 in Fig. 2) over light gray and dark gray to black (at L* = 0).

When printing such a color vignette 20 by means of a printing device with at least two multi-density inks, e.g. a light and a heavy cyan ink and a light and a heavy magenta ink, an undesired rainbow effect appears in the vignette. Such a rainbow effect is particularly noticeable in neutral vignettes, and this especially for low GCR (Gray Component Replacement) values. Low GCR means that the gray values are made with almost a minimal amount of black, i.e., for a CMYK printing device, mainly with CMY. Using a minimal amount of black is also called the minimum K alternative. If a minimal amount of black is used for reproducing gray values, the gray values are reproduced in a very unstable way. This means that a small change of the colorant values has a maximal effect on the required color. If however, a maximal amount of black is used (high GCR; also called the maximum K alternative), the grays are reproduced in a very stable way. However, e.g. the rendering of skin tones is often unsatisfactory with this solution. When using a smaller amount of black, such as in the so-called minimum K alternative, e.g. skin tones are rendered much better but some artifacts may appear in color vignettes. Errors in the neutral colors are easily noticed as the human visual system is very sensitive for neutrals.

We have found that such undesired rainbow effects, occurring when printing with at least two multi-density inks, e.g. a light and a heavy cyan ink and a light and a heavy magenta ink, can be suppressed if the heavy inks start at the same starting point. In Fig. 1, the starting point 11 for starting applying the first heavy ink (e.g. heavy cyan) has coordinate p₁ along path 15; analogously, the starting point 12 of the second heavy ink (e.g. heavy magenta) has coordinate p₂. Thus, in the corresponding vignette 20 in Fig. 2, the first heavy ink starts being applied at line 21, for p = p₁, and the second heavy ink starts being applied at line 22, for p = p₂. Preferably (see Fig. 1) the starting points 11 and 12 are equal. However, it is not required that they are exactly equal; it is sufficient that the starting points 11 and 12 are substantially equal. Two points in a color space are substantially equal if their color difference d, calculated according to ΔE^{*}_{CIE94} (with parameters k_{H} = k_{C} = k_{L} = 1; see "Measuring Colour" by R.W.G. Hunt, Fountain Press, England, third edition, 1998, ISBN 0 86343 387 1, section 3.11, p. 68) fulfills the relation d < t, wherein t equals 5, preferably 2, more preferably 1 and most preferably 0.4.

Now a particular embodiment of the invention is discussed wherein so-called ink mixing tables are used.

Calibration of a printing device with multi-density inks is customarily based on 1-ink processes: if there is a light ink and a heavy ink for cyan for example, a relation is given that converts a global cyan value to a light cyan value and a heavy cyan value. Hence, a CMYK printer having multi-density inks is still considered as a CMYK device, but internally the global ink values are converted to multi-density ink values. The relation between a global ink value for a particular colorant and the multi-density ink values for that colorant can be given by an ink splitting table, also called ink mixing table.

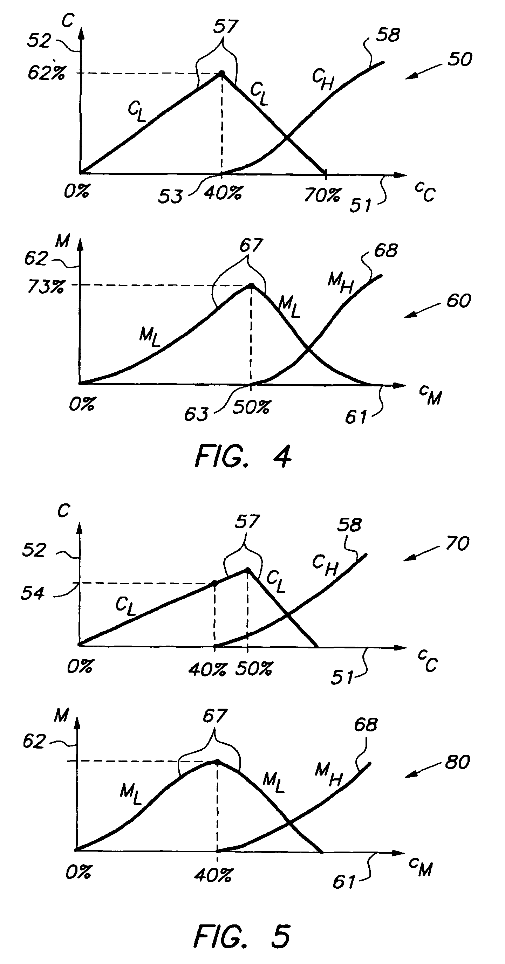

Fig. 4 shows a first ink mixing table 50 for cyan (C) multi-density inks and a second ink mixing table 60 for magenta (M) multi-density inks. Ink mixing table 50 gives the amount of light cyan (C_{L}) ink, curve 57, and the amount of heavy cyan (C_{H}) ink, curve 58, as a function of the global colorant value c_{C} for cyan, which is indicated along axis 51. In the embodiment of Fig. 4, the heavy cyan ink starts at a global cyan value 53 of c_{C} = 40%. The amount of light cyan ink 57 reaches a maximum at this global cyan value c_{C} = 40%, and then decreases to zero at c_{C} = 70%. The amounts of light and heavy ink are given by the ordinate values of curves 57 and 58, i.e. by the values along axis 52. In Fig. 4, the maximum amount for the light cyan ink is 62%. Analogously, in ink mixing table 60, curve 67 gives the amount of light magenta (M_{L}) ink and curve 68 gives the amount of heavy magenta (M_{H}) ink, as a function of the global colorant value c_{M} for magenta, indicated along axis 61. In Fig. 4, the heavy magenta starts at a global magenta value 63 of c_{M} = 50%, where the amount of light magenta ink 67 reaches its maximum of 73%, as indicated along axis 62.

In one embodiment of the invention, the points 53, 63 where the heavy cyan and the heavy magenta inks start are mapped by the calibration onto points that are substantially equal; preferably they are mapped onto the same point.

This mapping may be performed as follows. First, a path 15 in a color space 10 is selected, e.g. the L* axis in CIELAB space. Suppose that the printing device is a CMYK device, with light and heavy inks for cyan and for magenta. Furthermore, a GCR value is given, or, in general, a relation is given between L* and GCR values, so that for every L* value, the corresponding GCR value is known. Now, for all points in color space along the L* axis, a color separation can be made into the colorants C_{L}, M_{L}, Y and K, by making use of the inverted printer model for these colorants. Thus, a table is obtained for points along path 15, which is in this example the L* axis:

**Table I**

| | | | | | | |
|---|---|---|---|---|---|---|
| p | GCR | (L*,a*,b*) | C_{L} | M_{L} | Y | K |
| 0 | ... | ... | ... | ... | ... | ... |
| ... | | | | | | |
| 52 | ... | (52, 0, 0) | 62 | 73 | 48 | 2 |
| ... | | | | | | |
| 100 | ... | ... | ... | ... | ... | ... |

In Table I, each row represents data for a point on the path in color space: p is the coordinate along the path, GCR is the GCR-value, (L*, a*, b*) are the color values in CIELAB space, and the last four columns give, for the set of colorants C_{L}, M_{L}, Y and K, the colorant values in % required to render the color having color values (L*, a*, b*). E.g. in order to reproduce the color L* = 52 (and a*=b*=0) by the printer, using the given set of colorants, the printer has to be addressed by the colorant values C_{L} = 62%, M_{L} = 73%, Y = 48% and K = 2%.

The point with p = 52% can be taken as the starting point for the heavy cyan and the heavy magenta inks. Suppose that the ink mixing tables for cyan and for magenta have the form as shown in Fig. 4, i.e. at c_{C} = 40% the heavy cyan ink C_{H} starts and the light cyan ink C_{L} reaches its maximum, and at c_{M} = 50% the heavy magenta ink M_{H} starts and the light magenta ink M_{L} reaches its maximum. Then, for these maximum values the color separation values for C_{L} and M_{L} of the point p = 52% (see Table I) are taken, i.e. C_{L} = 62% for c_{C} = 40%, and M_{L} = 73% for C_{M} = 50%, as shown in Fig. 4.

Both the point where the heavy cyan ink C_{H} starts (c_{C} = 40%) and the point where the heavy magenta ink M_{H} starts (c_{M} = 50%) are mapped by the calibration to the set of colorant values C_{L} = 62%, M_{L} = 73%, Y = 48%, K = 2% (i.e. the color separation values of point p = 52%) . When the printing device is addressed with this set of colorant values, it will reproduce the color (L*, a*, b*) = (52, 0, 0), i.e. the color of a point on the selected path in color space (the selected path is, in this example, the L* axis). This point in color space corresponds in colorant space to the set of colorant values: the set of colorant values is obtained from the point in color space by means of the inverted printer model. If the colorant space is CMYK, for given GCR, there is an unambiguous relation between color space and colorant space.

The point where the heavy cyan ink starts and the point where the heavy magenta ink starts need not be mapped to exactly the same set of colorant values in order to obtain the advantage of suppressing undesired rainbow effects. Mapping the point where the heavy cyan ink starts to a first set of colorant values, such as C_{L} = 61%, M_{L} = 73%, Y = 48%, K = 2%, and mapping the point where the heavy magenta ink starts to a second, slightly different set of colorant values, such as C_{L} = 62%, M_{L} = 73%, Y = 48%, K = 2% will also yield this advantage. It is preferred that the first and the second set of colorant values correspond in color space to points that are substantially equal, as defined already above.

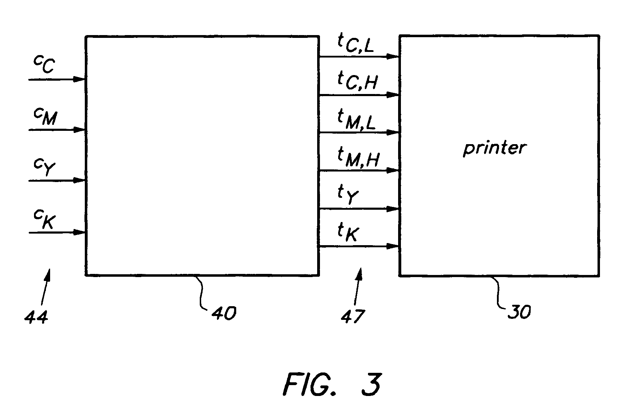

The mapping by calibration is illustrated by Fig. 3. In the shown embodiment, the calibration 40 maps colorant values 44 to tonally compensated colorant values 47 for a CMYK printer having light and heavy cyan and magenta inks. In Fig. 3, the calibration 40 encompasses ink splitting (or ink mixing) as well as tonal compensation: the four colorant values c_{C} c_{M}, c_{Y} and c_{K} are mapped to six tonally compensated colorant values t_{C,L}, t_{C,H}, t_{M,L}, t_{M,H}, t_{Y} and t_{K}. In the narrow sense, calibration only involves the tonal compensation required to put the printing device in a standard state; however, this tonal compensation may be incorporated in the ink mixing tables. For more information on calibration, we refer to patent application **EP-A-1 083 739,** mentioned already above.

In the present invention, the sets of colorant values, onto which the points for starting applying the heavy inks are mapped, are the final values used to address the printer, i.e. the values 47 after application of any tonal compensation and immediately before the printer 30, as illustrated in Fig. 3. The values C_{L} = 62%, M_{L} = 73%, Y = 48% and K = 2% of the example discussed above are such values 47.

In the present invention, calibration is thus performed with respect to a combination of colorants (e.g. cyan, magenta and yellow), whereas in the prior art the colorants are calibrated independently from each other.

In the example discussed above in connection with Table I, a color separation was made in the four-dimensional colorant space having colorant axes for C_{L}, M_{L}, Y and K. In another embodiment of the invention, GCR = 0, i.e. K = 0 and the printer is considered as a three ink process (C_{L}, M_{L}, Y). Color separations are now made into C_{L}, M_{L} and Y. At the starting points of heavy cyan and heavy magenta, the values of light cyan and light magenta are now chosen so that they result in a neutral color when a proper amount of yellow is added.

Both in the above example and in its three-dimensional variant, the selected path in color space is the L* axis in CIELAB. The calibration is thus optimized for printing neutral colors. As mentioned already above, the calibration can instead be optimized for another given path.

In Fig. 4, the heavy cyan ink starts where the light cyan ink reaches its maximum, and analogously for the magenta inks. In Fig. 5, this is also the case for the magenta inks (see ink mixing table 80) but not for the cyan inks, as is shown in ink mixing table 70: the heavy cyan ink C_{H} starts at C_{C} = 40%, but the light cyan ink C_{L} reaches its maximum at c_{C} = 50%. In this case, not the maximum value of the light cyan ink C_{L} but the value 54 of C_{L}, obtained where the heavy ink starts, is the value which is preferably a color separation value of a point on a path in color space, as discussed above.

However, it is preferred that the heavy ink does start where the light ink reaches its maximum. In this way, the color difference between a dot of the heavy ink and the corresponding light ink is rather small. Moreover, as more heavy ink is applied for increasing colorant values, the amount of light ink is reduced, which reduces the total amount of ink applied to the receiving substrate, and thus reduces bleeding and coalescence effects.

Advantageously, important points in the ink mixing tables, such as end points of curves or maximum values, are defined based on color values and not on ink amounts. E.g. the set of colorant values at which the heavy inks start (in the example discussed above in connection with Table I this is a set of (C_{L}, M_{L}, Y, K) values) is advantageously determined so that e.g. a given L* value is reached. This may be obtained by choosing as the starting point on the selected path in color space e.g. a point having a coordinate in CIELAB of L* = 50.

Preferably, not only the heavy inks, such as heavy cyan and heavy magenta, start in the same point on a selected path in color space, but also other points: e.g. the light inks may stop in a particular point on the selected path (in Fig. 4, the light cyan ink C_{L} stops at c_{C} = 70%), the heavy inks may stop at yet another point on the selected path.

The invention was discussed especially with respect to CMYK ink jet printers, but the present invention is not limited to the embodiments discussed above. The invention is also applicable to printing devices using other printing technologies, such as offset or gravure printing, electrophotography, thermal transfer, dye sublimation. The invention can also be applied to other color reproduction devices or processes such as color displays, color photography or film recorders. Other colors than CMYK may be applied; the printer may have more, or less, than four colorants. More than two multi-density inks of the same colorant may be used; in this case, the invention is preferably applied to all pairs of inks having successive densities (suppose three multi-density inks of a given colorant have, successively, a high density d₁, a medium density d₂, and a low density d₂, then the invention is preferably applied to the inks having densities d₁ and d₂, and more preferably also to the inks having densities d₂ and d₃).

Those skilled in the art will appreciate that numerous modifications and variations may be made to the embodiments disclosed above without departing from the scope of the present invention.

### List of reference signs

- 10 :: color space
- 11 :: first starting point
- 12 :: second starting point
- 15 :: path
- 20 :: color vignette
- 21 :: line
- 22 :: line
- 25 :: axis
- 26 :: axis
- 30 :: printer
- 40 :: calibration
- 44 :: colorant values
- 47 :: tonally compensated colorant values
- 50 :: ink mixing table
- 51 :: axis
- 52 :: axis
- 53 :: point
- 54 :: value
- 57 :: curve
- 58 :: curve
- 60 :: ink mixing table
- 61 :: axis
- 62 :: axis
- 63 :: point
- 67 :: curve
- 68 :: curve
- 70 :: ink mixing table
- 80 :: ink mixing table

## Claims

1. An apparatus for printing an image on a receiving substrate, the apparatus comprising:
- means for applying a first light ink and a first heavy ink of a first colorant and a second light ink and a second heavy ink of a second colorant, different from said first colorant, to said receiving substrate;
- means for starting applying said first heavy ink, when printing a color vignette (20), at a first starting point (11) on a path (15) in a color space (10), wherein said path (15) corresponds to said color vignette (20); and
- means for starting applying said second heavy ink, when printing said color vignette (20), at a second starting point (12) on said path (15);
**characterized in that** a color difference d between said second starting point (12) and said first starting point (11) fulfills the relation d < 5, wherein said color difference d is calculated according to ΔE*_{CIE94}.

2. The apparatus according to claim 1 wherein said first colorant is magenta and said second colorant is cyan.

3. The apparatus according to any one of the preceding claims wherein said path corresponds to a set of neutral colors in said color space (10).

4. The apparatus according to any one of the preceding claims wherein said apparatus is an ink jet printer.

5. A method for calibrating a printing device having a first light ink and a first heavy ink of a first colorant and a second light ink and a second heavy ink of a second colorant, different from said first colorant, the method comprising the steps of:
- defining a colorant space for said printing device, wherein said colorant space has a first colorant axis corresponding to said first light ink, a second colorant axis corresponding to said second light ink, and a set of at least one other axis, wherein each axis of said set corresponds to a colorant different from said first colorant and different from said second colorant;
- mapping a first point (53) for starting applying said first heavy ink when printing a color vignette (20) to a first set of colorant values in said colorant space, wherein a first starting point (11) on a path (15) in a color space (10) corresponds to said first set of colorant values, said path (15) corresponding to said color vignette (20);
- mapping a second point (63) for starting applying said second heavy ink when printing said color vignette (20) to a second set of colorant values in said colorant space, wherein a second starting point (12) on said path (15) corresponds to said second set of colorant values and wherein a color difference d between said second starting point (12) and said first starting point (11) fulfills the relation d < 5, wherein said color difference d is calculated according to ΔE*_{CIE94}.

6. The method according to claim 5 wherein said first colorant is cyan and said second colorant is magenta.

7. The method according to claim 5 or claim 6 wherein said path corresponds to a set of neutral colors in said color space (10).

8. A computer program comprising computer program code means adapted to perform the steps of the method according to any one of claims 5 to 7 when said program is run on a computer.

9. A computer readable medium comprising program code adapted to carry out the method according to any one of claims 5 to 7 when run on a computer.

10. A data processing system comprising means for carrying out the steps of the method according to any one of claims 5 to 7.

## Revendications

1. Appareil pour imprimer une image sur un substrat récepteur, l'appareil comprenant :
- un moyen pour appliquer une première encre légère et une première encre lourde d'un premier colorant et une deuxième encre légère et une deuxième encre lourde d'un deuxième colorant, différent dudit premier colorant, sur ledit substrat récepteur ;
- un moyen pour commencer l'application de ladite première encre lourde, lors de l'impression d'une vignette couleur (20), en un premier point de départ (11) sur un chemin (15) dans un espace colorimétrique (10), ledit chemin (15) correspondant à ladite vignette couleur (20) ; et
- un moyen pour commencer l'application de ladite deuxième encre lourde, lors de l'impression de ladite vignette couleur (20), en un deuxième point de départ (12) sur ledit chemin (15) ; **caractérisé en ce qu'**une différence de couleur d entre ledit deuxième point de départ (12) et ledit premier point de départ (11) obéit à la relation d < 5, ladite différence de couleur d étant calculée conformément à ΔE*_{CIE94}.

2. Appareil selon la revendication 1, dans lequel ledit premier colorant est le magenta et ledit deuxième colorant est le cyan.

3. Appareil selon l'une quelconque des revendications précédentes, dans lequel ledit chemin correspond à un groupe de couleurs neutres dans ledit espace colorimétrique (10).

4. Appareil selon l'une quelconque des revendications précédentes, ledit appareil étant une imprimante à jet d'encre.

5. Procédé pour calibrer un dispositif d'impression comportant une première encre légère et une première encre lourde d'un premier colorant et une deuxième encre légère et une deuxième encre lourde d'un deuxième colorant, différent dudit premier colorant, le procédé comprenant les étapes consistant à :
- définir un espace de colorants pour ledit dispositif d'impression, ledit espace de colorants comportant un premier axe de colorant correspondant à ladite première encre légère, un deuxième axe de colorant correspondant à ladite deuxième encre légère et un groupe comprenant au moins un autre axe, chaque axe dudit groupe correspondant à un colorant différent dudit premier colorant et différent dudit deuxième colorant ;
- mettre en correspondance un premier point (53) pour commencer l'application de ladite première encre lourde lors de l'impression d'une vignette couleur (20) avec un premier groupe de valeurs de colorant dans ledit espace de colorants, un premier point de départ (11) sur un chemin (15) dans un espace colorimétrique (10) correspondant audit premier groupe de valeurs de colorant, ledit chemin (15) correspondant à ladite vignette couleur (20) ;
- mettre en correspondance un deuxième point (63) pour commencer l'application de ladite deuxième encre lourde lors de l'impression de ladite vignette couleur (20) avec un deuxième groupe de valeurs de colorant dans ledit espace de colorants, un deuxième point de départ (12) sur ledit chemin (15) correspondant audit deuxième groupe de valeurs de colorant et une différence de couleur d entre ledit deuxième point de départ (12) et ledit premier point de départ (11) obéissant à la relation d < 5, ladite différence de couleur d étant calculée conformément à ΔE*_{CIE94}.

6. Procédé selon la revendication 5, dans lequel ledit premier colorant est le cyan et ledit deuxième colorant est le magenta.

7. Procédé selon la revendication 5 ou la revendication 6, dans lequel ledit chemin correspond à un groupe de couleurs neutres dans ledit espace colorimétrique (10).

8. Programme d'ordinateur comprenant un moyen formant code de programme d'ordinateur conçu pour mettre en oeuvre les étapes du procédé selon l'une quelconque des revendications 5 à 7 lorsque ledit programme est exécuté sur un ordinateur.

9. Support lisible par ordinateur comprenant un code de programme conçu pour mettre en oeuvre le procédé selon l'une quelconque des revendications 5 à 7 lorsqu'il est exécuté sur un ordinateur.

10. Système de traitement de données comprenant un moyen pour mettre en oeuvre les étapes du procédé selon l'une quelconque des revendications 5 à 7.

## Patentansprüche

1. Vorrichtung zum Drucken eines Bilds auf ein aufnehmendes Substrat, wobei die Vorrichtung folgendes umfaßt:
- Mittel zum Aufbringen einer ersten leichten Tinte und einer ersten schweren Tinte eines ersten Farbmittels und einer zweiten leichten Tinte und einer zweiten schweren Tinte eines zweiten Farbmittels, von dem ersten Farbmittel verschieden, auf das aufnehmende Substrat;
- Mittel zum Starten des Aufbringens der ersten schweren Tinte, wenn eine Farbvignette (20) gedruckt wird, an einem ersten Startpunkt (11) auf einem Weg (15) in einem Farbraum (10), wobei der Weg (15) der Farbvignette (20) entspricht; und
- Mittel zum Starten des Aufbringens der zweiten schweren Tinte, wenn die Farbvignette (20) gedruckt wird, an einem zweiten Startpunkt (12) auf dem Weg (15);
**dadurch gekennzeichnet, daß** eine Farbdifferenz d zwischen dem zweiten Startpunkt (12) und dem ersten Startpunkt (11) die Beziehung d < 5 erfüllt, wobei die Farbdifferenz d berechnet wird entsprechend ΔE*_{CIE94}.

2. Vorrichtung nach Anspruch 1, wobei das erste Farbmittel Magenta und das zweite Farbmittel Cyan ist.

3. Vorrichtung nach einem der vorhergehenden Ansprüche, wobei der Weg einer Menge von Neutralfarben in dem Farbraum (10) entspricht.

4. Vorrichtung nach einem der vorhergehenden Ansprüche, wobei die Vorrichtung ein Tintenstrahldrucker ist.

5. Verfahren zum Kalibrieren einer Druckeinrichtung mit einer ersten leichten Tinte und einer ersten schweren Tinte eines ersten Farbmittels und einer zweiten leichten Tinte und einer zweiten schweren Tinte eines zweiten Farbmittels, von dem ersten Farbmittel verschieden, wobei das Verfahren die folgenden Schritte umfaßt:
- Definieren eines Farbmittelraums für die Druckeinrichtung, wobei der Farbmittelraum eine erste Farbmittelachse entsprechend der ersten leichten Tinte, eine zweite Farbmittelachse entsprechend der zweiten leichten Tinte und einer Menge von mindestens einer weiteren Achse aufweist, wobei jede Achse der Menge einem Farbmittel enstspricht, das von dem ersten Farbmittel und von dem zweiten Farbmittel verschieden ist;
- Abbilden eines ersten Punkts (53) zum Starten des Aufbringens der ersten schweren Tinte, wenn eine Farbvignette (20) gedruckt wird auf eine erste Menge von Farbmittelwerten in dem Farbmittelraum, wobei ein erster Startpunkt (11) auf einem Weg (15) in einem Farbraum (10) der ersten Menge von Farbmittelwerten entspricht, wobei der Weg (15) der Farbvignette (20) entspricht;
- Abbilden eines zweiten Punkts (63) zum Starten des Aufbringens der zweiten schweren Tinte, wenn eine Farbvignette (20) gedruckt wird auf eine zweite Menge von Farbmittelwerten in dem Farbmittelraum, wobei ein zweiter Startpunkt (12) auf dem Weg (15) der zweiten Menge von Farbmittelwerten entspricht und wobei eine Farbdifferenz d zwischen dem zweiten Startpunkt (12) und dem ersten Startpunkt (11) die Beziehung d < 5 erfüllt, wobei die Farbdifferenz d berechnet wird gemäß ΔE*_{CIE94}.

6. Verfahren nach Anspruch 5, wobei das erste Farbmittel Cyan und das zweite Farbmittel Magenta ist.

7. Verfahren nach Anspruch 5 oder 6, wobei der Weg einer Menge von Neutralfarben in dem Farbraum (10) entspricht.

8. Computerprogramm, das Computerprogrammcodemittel umfaßt, die dafür ausgelegt sind, die Schritte des Verfahrens gemäß einem beliebigen der Ansprüche 5 bis 7 auszuführen, wenn das Programm auf einem Computer läuft.

9. Computerlesbares Medium, das Programmcode umfaßt, das dafür ausgelegt ist, das Verfahren nach einem der Ansprüche 5 bis 7 auszuführen, wenn es auf einem Computer läuft.

10. Datenverarbeitungssystem umfassend Mittel zum Ausführen der Schritte des Verfahrens nach einem beliebigen der Ansprüche 5 bis 7.
